# EUROPÄISCHE PATENTSCHRIFT

(11) **EP 1 859 715 B1**
(45) Veröffentlichungstag und Bekanntmachung des Hinweises auf die Patenterteilung: **18.07.2012**
(21) Anmeldenummer: 07010332.0
(22) Anmeldetag: 24.05.2007
(51) Int. Cl.: A47J 31/40

(54) **Einrichtung zum selbsttätigen Auflösen von Instantpulver, insbesondere Milchpulver, in heissem Wasser und insbesondere zum Aufschäumen**
Device for automatic dissolution of instant powder, in particular milk powder, in hot water and in particular for foaming
Appareil pour dissolution automatique de poudre instantanée, en particulier de lait en poudre, dans de l'eau chaude et en particulier pour le foisonnement

(30) Priorität: 27.05.2006 DE 202006008409 U
(43) Veröffentlichungstag der Anmeldung: 28.11.2007
(73) Patentinhaber: Eugster/Frismag AG, 8580 Amriswil (CH)
(72) Erfinder: Fischer, Daniel, 8590 Romanshorn (CH); Brendle, Christian, 8580 Amriswil (CH)
(74) Vertreter: Schubert, Siegmar

(56) Entgegenhaltungen:
- EP-A1- 0 009 270
- WO-A-02/100224
- WO-A-03/070072
- WO-A-2004/017743
- DE-A1- 2 225 779
- GB-A- 1 067 684
- US-A- 3 568 887
- US-A- 4 139 125
- US-B1- 6 267 496

## Beschreibung

Die Erfindung betrifft eine Einrichtung zum selbstständigen Auflösen von Instantpulver, insbesondere Milchpulver, in heißem Wasser und insbesondere zum Aufschäumen, nach dem Oberbegriff des Anspruchs 1.

Das aufzulösende Instantpulver ist ein Nahrungs- oder Genussmittel, insbesondere Milchpulver oder eine Kakaomischung. Vorzugsweise ist es nicht nur aufzulösen, sondern darüber hinaus unter Lufteinschluss in Milchschaum zu verwandeln. Unter Milchschaum soll somit solcher auf Getränke aufbringbarer Schaum verstanden werden, der aus Milch besteht und/oder milchartige Bestandteile aufweist, wie zum Beispiel Schaum kakaohaltiger Getränke.

Die Einrichtung zum selbstständigen Auflösen von Instantpulver, insbesondere Milchpulver ist bevorzugt integraler Bestandteil einer Kaffeezubereitungsmaschine, kann aber auch als eigenständiges Aufschäumgerät realisiert sein.

Eine bereits früher von der Anmelderin vorgeschlagene Milchschaumerzeugungseinrichtung zur Erzeugung von Milchschaum aus Milchpulver und Heißwasser umfasst einen rotationssymmetrischen Heißwasserbrausekopf, der nach unten gerichtete und unten offene Heißwasserkanäle aufweist (DE 10 2006 008 341.5). Von den unten offenen Heißwasserkanälen sind einige nahe einer äußeren Mantelfläche des Heißwasserbrausekopfes angeordnet und können gegenüber der Senkrechten in Umfangsrichtung um 2° bis 12° geneigt sein. Hingegen verlaufen die nahe der zentralen Achse des Heißwasserbrausekopfes angeordneten Heißwasserkanäle parallel zu dieser Achse. Ein Heißwasserdruckerzeuger und Wassererhitzer der früher vorgeschlagenen Milchschaumerzeugungseinrichtung können in verschiedener Weise realisiert werden. Beispielsweise können der Heißwasserdruckerzeuger und der Wassererhitzer einer Kaffeemaschine verwendet werden, in der die Milchschaumerzeugungseinrichtung integriert ist. Der Heißwasserdruckerzeuger kann eine Wasserpumpe sein. Es ist aber auch möglich, dass der Heißwasserdruckerzeuger und der Wassererhitzer in einem Wasserboiler nach dem Dampfdruckprinzip integriert sind. In allen diesen Fällen wird der Milchschaum in einem oben offenen Aufschäumgefäß erzeugt, in welches zum Bereiten von Milchschaum jeweils eine Portion Milchpulver eingebracht wird. Zur Milchschaumerzeugung befindet sich der Heißwasserbrausekopf im Abstand oberhalb des Milchpulvers, so dass Wasserstrahlen, die aus dem Heißwasserbrausekopf austreten, annähernd gleichmässig verteilt auf die Portion Milchpulver treffen, um dieses aufzulösen und unter Einschluss der von den Wasserstrahlen mitgerissenen Luft größtenteils in Milchschaum zu verwandeln. Der Heißwasserbrausekopf ist dabei so eingestellt, dass er sich oberhalb des entstehenden Schaums befindet, um von diesem frei zu bleiben. Durch die zur Senkrechten um 2° bis 12° geneigten Ausbildung der nahe der äußeren Mantelfläche angeordneten Heißwasserkanäle, wird erreicht, dass die äußeren Heißwasserstrahlen mit einem Drall in Umfangsrichtung des Heißwasserbrausekopfes, also mit einer zirkularen Komponente aus diesem austreten und mit Drall auf das Milchpulver treffen, was die Durchmischung des Pulvers mit dem Heißwasser sowie ein fast zeitgleiches Aufschäumen fördert. Unter Umständen nachteilig ist aber, das vor dem Aufschäumen erforderliche portionsweise Einbringen des Milchpulver in das Aufschäumgefäß durch dessen obere Öffnung, wobei die Öffnung möglichst frei von dem Heißwasserbrausekopf sein soll. Deswegen können die Heißwasserstrahlen insbesondere bei einem teilweisen Verstopfen aus dem offenen Raum zwischen dem Heißwasserbrausekopf und dem Aufschäumgefäß teilweise in dessen Umgebung gelangen, was stören kann.

Das Dokument US-A-4 139 125 offenbart einen Getränkespender mit einer Mischkammer, einer Düse, die der Mischkammer über eine Leitung erhitztes Wasser von einem Durchlauferhitzer aus tangential und etwas nach unten gerichtet zuführt. Die zylindrische Mischkammer ist oben vollständig offen. Im Abstand über dieser Pulvereinlauföffnung endet ein Getränkepulverabgabemaul eines rechteckigen Blocks mit einem Getränkepulvermagazin, in dem unten eine Förderschnecke gelagert ist, durch die dem Getränkepulverabgabemaul Getränkepulver zugeführt wird. Die Mischkammer ist vertikal angeordnet, weist eine zylindrische Innenwand und einen Boden mit Auslauföffnung auf. Der Durchmesser der Pulvereinlauföffnung der Mischkammer ist deutlich größer als der Durchmesser des Auslaufs im Boden der Kammer. Über der Pulvereinlauföffnung mündet eine Heißluftzuleitung in das Getränkepulverabgabemaul, um den Block mit dem Getränkepulver zu erhitzen und dadurch Ansätze in einer Pulverabgabeöffnung sowie ein Verbacken des Getränkepulvers zu vermeiden.

Mit dem Dokument WO 03/070072 A ist ein Getränkeautomat offenbart, der eine Mischkammer und eine um etwa 10° gegenüber der Horizontalen nach unten gerichtete Düse aufweist, durch die der Mischkammer über eine Leitung erhitztes Wasser tangential schräg nach unten strömend zugeführt wird. Dadurch rotiert das eingespeiste Wasser schraubenlinienförmig nach unten und wird darin gehindert, in der Mischkammer hochzusteigen. In die Mischkammer ragt koaxial ein Einlauftrichter, der jedoch nicht über der Mischkammer bzw. einer oberen Deckwand der Mischkammer angeordnet ist. Als Deckwandabschnitt der Mischkammer kann der obere Rand der Mischkammer angesehen werden, der zu dem Einlauftrichter abgesenkt ist, woraus sich ergibt, dass sich der Einlauftrichter vollständig unter dem oberen Deckwandabschnitt befindet. Zwischen dem Einlauftrichter, dem diesem radial außen gegenüberliegenden zylindrischen Wandabschnitt der Mischkammer und dem oberen Deckwandabschnitt wird ein nach unten offener, annähernd ringförmiger Rückhalteraum gebildet

Das Dokument GB-A-1 067 684 offenbart ein Gerät zum Bereiten von Getränken durch Mischen von Heißwasser mit Pulver, das aufgelöst werden soll, wobei das Gemisch mit Luft versetzt wird. Hierzu ist eine Mischkammer mit ihrer Achse horizontal angeordnet. Ein vorzugsweise konischer Einlauftrichter mit vertikaler Achse ist über eine Einlauföffnung peripher mit der Mischkammer verbunden. In die Mischkammer ist eine Düse, die mit einer Heißwasserleitung verbunden ist, schräg nach unten tangential zur Innenwand gerichtet. Eine weitere Heißwasserdüse ist in dem Einlauftrichter so angeordnet, dass sie dessen konische Innenwand tangential beaufschlagt. Damit soll das in den Eingabetrichter fallende Trockenpulver aufgelöst werden. In der Mischkammer soll dann durch Verwirbelung des tangential eingespeisten Vorgemischs das Getränk fertiggestellt werden, welches die Mischkammer durch eine Auslauföffnung verlässt. Die Mischkammer weist einen inneren Vorsprung auf, der einen Trennabschnitt zwischen der in die Einlauföffnung eingespeisten Vormischung und dem in der Mischkammer gebildeten Wirbel darstellt.

Eine heiße Schokolade spendende Einrichtung nach dem Oberbegriff des Anspruchs 1 ist in dem Dokument US 3 568 887 A offenbart. In dieser Einrichtung wird einer als Trichter bezeichneten vertikal angeordneten Mischkammer mit einer zylindrischen Innenwand durch eine Düse über eine Leitung erhitztes Wasser im Wesentlichen tangential zugeführt. Die Düse ist hierzu nicht streng tangential bzw. horizontal angeordnet, sondern etwas nach unten geneigt. Weiterhin soll dadurch vermieden werden, dass Wasser rotierend aus der Oberseite der Mischkammer herausgeschleudert wird, dass eine in das Innere der Mischkammer geneigte Rückhalteplatte oben an der Mischkammer angebracht ist. Da die Mischkammer mit der Rückhalteplatte unter einem Pulverabgabeende einer Förderschnecke angeordnet ist, dient die Rückhalteplatte auch als Einlauftrichter, der in die oben offene Mischkammer hineinragt. Wenn die geneigte Rückhalteplatte bzw. der Einlauftrichter zugleich auch als obere Deckwand der Mischkammer angesehen wird, so ist jedoch der Trichter nicht vollständig über der geneigten oberen Deckwand angeordnet: Bezogen auf den oberen Abschnitt/Rand der Deckwand liegt vielmehr der Trichter unter der Deckwand, mit der Folge, dass zwischen einem oberen Innenwandabschnitt der Mischkammer und der inneren gegenüberliegenden Rückhalteplatte ein ringförmiger, nach unten offener Rückhalteraum gebildet ist, aus dem das heiße Wasser nicht nach oben heraustreten kann. Außerdem ist die geneigte Rückhalteplatte nicht so geformt, dass sich von unten nach oben progressiv erweiternde lichte Querschnitte bzw. eine im Längsschnitt parabelförmige Innenwand des Eingabetrichters bildet. Unter einer Auflauföffnung der Mischkammer ist eine Schlag- bzw. Aufschäumeinrichtung mit einer Kammer vorgesehen, in der ein motorisch angetriebener Propeller rotiert, der die Komponenten mischt.

Der vorliegenden Erfindung liegt die Aufgabe zugrunde, eine Einrichtung zum selbstständigen Auflösen von Instantpulver, insbesondere Milchpulver, in heißem Wasser und insbesondere zum Aufschäumen der eingangs genannten Gattung zu schaffen, die es ermöglicht, das Instantpulver nicht nur portionsweise, sondern fortlaufend aufzulösen und insbesondere aufzuschäumen, und die dazu erforderliche Bedienung einfach und sicher zugestalten.

Diese Aufgabe wird für eine Einrichtung zum selbstständigen Auflösen von Instantpulver, insbesondere Milchpulver, in heißem Wasser und insbesondere zum Aufschäumen, mit den in Anspruch 1 angegebenen Merkmalen gelöst.

In dieser Einrichtung wird das heiße zum Auflösen des Instantpulvers verwendete Wasser in einem energiereichen Zustand aus der Düse in die weitgehend geschlossene Schäumkammer eingespritzt, wobei ein Heißwasserstrahl, der aus einer Luftstrecke mitgerissene Luft führen kann, mit dem fortlaufend zudosierten Instantpulver zusammen trifft. Vorteilhaft können dabei die Raten der Pulverzufuhr mit der Heißwasserstrahlzufuhr aufeinander abgestimmt sein, so dass die Zusammensetzung, beziehungsweise Konsistenz des aufgelösten Getränkes beziehungsweise Schaums stets gleich ist. Hierzu dient eine Kopplung der Antriebe der kontinuierlich fördernden Pulver-Fördereinrichtung einerseits und der Wasserpumpe andererseits gemäß Anspruch 10.

Das in die Schäumkammer innen tangential mit hoher Geschwindigkeit eintretende Heißwasser bzw. im Falle des Aufschäumens Heißwasser-Luftgemisch wird in der Schäumkammer in schnelle Rotation versetzt und tritt deswegen teilweise durch die Pulvereinlauföffnung der Schäumkammer in den Einlauftrichter aus und kann in diesem nach oben steigen, wobei eine erste Durchmischung des rotierenden Heißwasserluftgemisches mit dem einfallenden Instantpulver, speziell Milchpulver erfolgt. Wenn das dabei entstehende Milchluftgemisch in dem sich vorzugsweise progressiv erweiternden Einlauftrichter genügend Rotationsenergie verloren hat, sinkt es innerhalb des aufsteigenden Heißwasserluftgemischstrudels nach unten in die Schäumkammer zurück, in der es durch das nachströmend eintretende Heißwasser wieder in schnellere Rotation versetzt wird und aufschäumt. Indem immer weiter Heißwasser und Milchpulver in die Schäumkammer beziehungsweise den Einlauftrichter einströmen, verläuft der Misch-Schäumvorgang fortlaufend. Dabei entstehender Schaum, speziell Milchschaum wird aus der Schäumkammer durch die Auslauföffnung gedrängt.

Die Schäumkammer ist vertikal angeordnet und mit einer zylindrischen Innenwand ausgebildet, die um eine vertikale Mittelachse ausgeformt ist, und umfasst eine obere Deckwand mit der Pulvereinlauföffnung sowie einen Boden mit der Auslauföffnung. Die Anordnung der Schäumkammer und des Einlauftrichters ist somit vertikal übereinander in Verlängerung der vertikalen Mittelachse der Brühkammer. Damit wird erreicht, dass im Betrieb der Einrichtung das Heißwasser-Luftgemisch aus der Schäumkammer nach oben in den Einlauftrichter austritt und nach dem voranstehend geschilderten Durchmischen mit Instantpulver, speziell Milchpulver in die Schäumkammer durch Schwerkraft zurücksinken kann. Nach weiterem Misch-Schäumvorgang in der Schäumkammer verlässt der entstandene Schaum diese nach unten durch die Auslauföffnung. Mit dieser kompakten Einrichtung wird Milchpulver sehr intensiv in dem heißen Wasser gelöst und aufgeschäumt.

Mit der erfindungsgemäßen Einrichtung ist es möglich, statt Schaum, d.h. speziell Milchschaum lediglich heißes Getränk beziehungsweise Milch aus dem aufgelösten Instantpulver, beziehungsweise Milchpulver zu bereiten. Hierzu wird der Schäumkammer lediglich Heißwasser, aber keine Luft durch die Düse zugeführt. Um diese Betriebsart alternativ zur Schaumerzeugung einfach umschaltbar zu realisieren, mündet in die Heißwasserleitung stromaufwärts der Düse eine absperrbare Luftstrecke, aus der in nicht abgesperrtem Zustand Luft in die Heißwasserleitung mitgerissen wird. Die absperrbare Luftstrecke befindet sich dabei zweckmäßig nahe einem Wassereinlauf der Düse. Wie oben erwähnt wird zum Dosieren des aufzulösenden Instantpulvers, insbesondere Milchpulvers eine kontinuierlich fördernde Pulverfördereinrichtung gemäß Anspruch 2 verwendet, die besonders vorteilhaft gemäß Anspruch 3 als Förderschnecke ausgebildet sein kann. Die Förderschnecke ermöglicht eine präzise kontinuierliche Dosierung.

Damit die beschriebenen Funktion der Aufschäumeinheit, d.h. der Kombination der Schäumkammer mit dem Einlauftrichter erfolgt, ist eine freie Auslassfläche der Auslassöffnung am Boden der Schäumkammer kleiner als eine freie Einlauffläche der Pulvereinlauföffnung am unteren Ende des Einlauftrichters. Bevorzugt beträgt das Flächenverhältnis der freien Einlauffläche zu der freien Auslauföffnung etwa 4:1. Bei kreisförmiger freier Einlauffläche und kreisförmiger freier Auslauföffnung entspricht dem ein Durchmesserverhältnis von etwa 2:1. Daraus ergibt sich, dass die Pulvereinlauföffnung bei kreisrunder Ausführung einen kleineren Durchmesser als den inneren Durchmesser der zylindrisch ausgeführten Schäumkammer aufweisen muss. Bevorzugt beträgt dieses Verhältnis des Innendurchmessers der Schäumkammer zu dem Durchmesser der Pulvereinlauföffnung gemäss Anspruch 5 etwa 3:1.

Die obigen quantitativ genannten Durchmesserverhältnisse der Pulvereinlauföffnung, der Schäumkammer und der Auslauföffnung sind abhängig von Parametern wie Pulververarbeitungsrate, hierzu erforderlichem Heißwasserdurchfluss und Wasserdruck gewählt, d.h. sie können abhängig von diesen Parametern modifiziert werden.

In dem innen um eine im wesentlichen vertikale Mittelachse rotationssymmetrisch geformten Einlauftrichter erweitern sich lichte Querschnitte des Einlauftrichters von unten nach oben progressiv. Aufgrund dieser Formgebung kann der Einlauftrichter bei guter Wirksamkeit kompakt ausgebildet sein.

Gemäß Anspruch 6 geht die Auslauföffnung unten an der Aufschäumkammer zweckmäßig in eine im wesentlichen vertikale, hohlzylindrische Auslaufstrecke über, in der speziell die aufgelöste Milch und der Milchschaum, die aus der Schäumkammer austreten, beruhigt und zentriert werden, um ein unter der Auslauföffnung, beziehungsweise der Auslaufstrecke aufgestelltes Auffanggefäß, welches oben weit offen sein kann, zu beschicken, und zwar ohne Austritt in die Umgebung des Auffanggefäßes.

Als besonders vorteilhaft hat es sich erwiesen, wenn nach Anspruch 7 in einem unteren Abschnitt der Auslaufstrecke von unten ein Zentrierstab zentrisch hineinragt, um den Abfluss des Schaums, speziell Milchschaums in ein Auffanggefäß unter der Auslaufstrecke zu beruhigen und zu zentrieren.

Zur fertigungsgünstigen Herstellung einer hochwirksamen Einrichtung sind der Einlauftrichter und die Pulvereinlauföffnung, über die er in die Schäumkammer übergeht, die Schäumkammer, deren Auslauföffnung und die Auslaufstrecke um eine gemeinsame Mittelachse angeordnet.

Zum Betrieb der Einrichtung ist die Heißwasserleitung, die mit der Düse in Verbindung steht, zweckmässig an einen Durchlauferhitzer angeschlossen, der über eine Wasserpumpe aus einem Wasserbehälter gespeist werden kann.

Es kann stattdessen aber auch vorteilhaft sein, dass als Heißwasserdruckerzeuger und Wassererhitzer für die Einrichtung, wenn diese als Milchschaumerzeugungseinrichtung dient, den Heißwasserdruckerzeuger und den Wassererhitzer einer Kaffeemaschine zu verwenden, wobei die Heißwasserleitung der Milchschaumerzeugungseinrichtung mit dem Wassererhitzer verbunden ist und der Heißwasserdruckerzeuger stromaufwärts des Wassererhitzers angeordnet ist.

Insbesondere in dem letztgenannten Fall kann der Heißwasserdruckerzeuger eine Wasserpumpe sein.

Es stattdessen aber auch möglich, dass der Heißwasserdruckerzeuger und der Wassererhitzer in einem Wasserboiler nach dem Dampfdruckprinzip integriert sind, der mit der Heißwasserleitung der Einrichtung zum selbstständigen Auflösen von Instantpulver, speziell Milchpulver, und zum Aufschäumen verbunden ist.

Besonders in dem Fall, in dem die Flüssigkeitsdruckerzeugung durch eine Pumpe erfolgt, sind bevorzugt nach Anspruch 10 je ein Antrieb der kontinuierlich fördernden Pulverfördereinrichtung und der Pumpe über eine Kopplung miteinander gekoppelt. Damit können die Rate des aufzulösenden, beziehungsweise aufzuschäumenden Pulvers, speziell Milchpulvers und der Durchfluss des hierfür benötigen Heißwassers in optimalem Mengenverhältnis aufeinander abgestimmt werden. Das Verhältnis dieser Pulverrate und des Durchflusses kann konstant gehalten werden.

Gemäß Anspruch 11 ist die Aufschäumeinheit umfassend die Schäumkammer mit der Düse, einem Wassereinlauf in die Düse, die Auslaufstrecke mit dem Zentrierstab vorteilhaft als Wegwerfteil ausgebildet, welches mit der Heißwasserleitung, in die die Luftstrecke mündet, leicht auswechselbar verbunden werden kann. Insbesondere ist das Wegwerfteil auf die Heißwasserleitung aufsteckbar. Bei dem Wegwerfteil entfällt ein Bedarf sorgfältiger Reinigung, vielmehr ist ein frisch verwendetes Wegwerfteil an sich hygienisch und physiologisch einwandfrei. Das Wegwerfteil kann besonders vorteilhaft gemäß Anspruch 16 aus Kunststoff einstückig massearm, unkompliziert und damit wenig aufwendig hergestellt werden.

Ein Ausführungsbeispiel der Einrichtung zum selbstständigen Auflösen von Instantpulver, speziell Milchpulver in Heißwasser und zum Aufschäumen wird nachfolgend anhand eine Zeichnung mit zwei Figuren beschrieben, woraus sich Einzelheiten der erfindungsgemässen Einrichtung genauer ergeben können. Es zeigt:
- Figur 1: Eine schematische Darstellung der Einrichtung mit zugehörigen Baugruppen, einschließlich Aufschäumkammer und Düse, teilweise gegenüber der tatsächlichen Anordnung zur Veranschaulichung verschoben und geschnitten, und
- Figur 2: einen horizontalen Mittenschnitt durch einen wesentlichen Bestandteil der Einrichtung, nämlich der hier zylindrischen Aufschäumkammer mit tangentialem Einlauf der Düse.

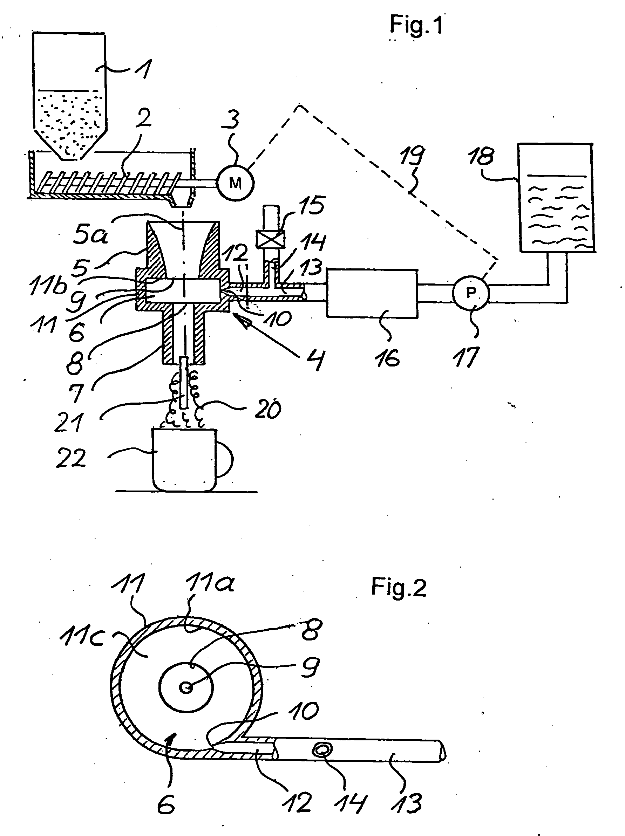

In Figur 1 ist mit 1 ein Pulvervorratsbehälter bezeichnet, unter dem als kontinuierliche Fördereinrichtung eine Förderschnecke 2 angeordnet ist. Diese fördert, durch einen Förderschneckenantrieb 3 angetrieben, Instantpulver, speziell Milchpulver zu einer Aufschäumeinheit, die allgemein mit 4 bezeichnet ist.

Die Aufschäumeinheit umfasst im wesentlichen einen Einlauftrichter 5, unterhalb des Einlauftrichters eine Schäumkammer 6 und unter dieser eine Auslaufstrecke 7. Diese Teile der Aufschäumeinheit sind wie in der Zeichnung dargestellt, zu einer virtuellen Mittelachse konzentrisch übereinander angeordnet und im wesentlich rotationssymmetrisch ausgebildet.

Mehr im Einzelnen ist die Schäumkammer 6 außen und innen zylindrisch, siehe auch Figur 2, und auch die Auslaufstrecke 7 ist zylindrisch, nämlich als Hohlzylinder mit kleinerem Durchmesser geformt und steht mit einer unteren Auslauföffnung 8 mit dem Inneren der Schäumkammer 6 in Verbindung.

Eine obere Deckwand 11b der Schäumkammer 6 ist mittig mit einer Pulvereinlauföffnung 9 durchbrochen und geht über diese in den über ihr befindlichen Einlauftrichter 5 über. Der Durchmesser der kreisrunden Pulvereinlauföffnung ist kleiner als der Innendurchmesser der Schäumkammer 6. Von der Pulvereinlauföffnung 9 ausgehend, erweitert sich das Innere des Einlauftrichters 5 progressiv nach oben, so dass eine nicht bezeichnete Innenwand des Einlauftrichters in dem in Figur 1 dargestellten Schnitt einen parabelförmigen Verlauf zeigt.

Von Parametern wie zu verarbeitender Instantpulvermenge pro Zeiteinheit, beziehungsweise Wassermenge pro Zeiteinheit und Wasserdruck sind Durchmesserverhältnisse der Pulvereinlauföffnung, der Auslauföffnung und der Schäumkammer abhängig. Als vorteilhaft hat sich für im Haushalt und in der Gastronomie übliche Mengen Milchschaums ein Durchmesserverhältnis der Pulvereinlauföffnung zu der Auslauföffnung von etwa 2:1 herausgestellt und ein Verhältnis des Innendurchmessers Schäumkammer zu dem Durchmesser der Pulvereinlauföffnung von etwa 3:1.

In die Schäumkammer. 6 ragt eine Düse 10, die wie insbesondere aus Figur 2 ersichtlich, so in der zylindrischen Wand 11 der Schäumkammer 6 angeordnet ist, dass die Düse 14 tangential zu einer Innenwand 11a der Schäumkammer 6 offen endet. Die Düse 10 ist etwa in halber Höhe der zylindrischen Wand 11 der Aufschäumeinheit 4 angeordnet, siehe Figur 1.

Ein Wassereinlauf 12 der Düse 10 steht mit einer Heißwasserleitung 13 in Verbindung. In der Nähe des Wassereinlaufs 12 mündet in die Heißwasserleitung 13 eine Luftstrecke 14, die mit der äusseren Atmosphäre in Verbindung steht, wenn ein Sperrschieber 15 in der Luftstrecke 14 zur Schaumerzeugung, speziell Milchschaumerzeugung geöffnet ist.

Sowohl zum Aufschäumen als auch nur zur Herstellung eines Getränkes aus gelöstem Instantpulver, speziell von Milch steht die Heißwasserleitung 13 über einen Durchlauferhitzer 16 und eine Wasserpumpe 17 stromaufwärts des Durchlauferhitzers mit einer Wasserquelle 18 hier in Form eines Wasserbehälters in Verbindung. Um die Transportmenge des Pulvers durch die Förderschnecke 2 mit der Wassermenge durch die Heißwasserleitung 1 3 zu koordinieren, steht ein nicht bezeichneter Antrieb der Wasserpumpe 17 mit dem Förderschneckenantrieb 3 über eine Kopplung 19 in Verbindung, die in Figur 1 durch eine unterbrochene Linie angedeutet ist und die durch ein verbindendes Getriebe oder eine gemeinsame Steuereinrichtung der Antriebe realisiert sein kann, um ein optimales Mengenverhältnis des Instantpulvers zu Heißwasserdurchfluss zu gewährleisten.

Zur Erzeugung speziell von Milchschaum fördert somit die Pumpe 17 eine Heißwasserfördermenge, die in einem vorbestimmten Verhältnis zu der fortlaufenden Milchpulvermenge steht, welche durch den Förderschneckenantrieb 3 zu der Aufschäumeinheit 4 transportiert wird und in den Einlauftrichter 5 fällt. Das in dem Durchlauferhitzer 16 erhitzte Frischwasser, das diesen als Heißwasser verlässt, reißt an der Einmündungsstelle der Luftstrecke 14 in die Heißwasserleitung 13 Luft aus der Luftstrecke mit, wonach das entstandene Heißwasser- Luftgemisch durch die Düse 10 tangential innen in die Schäumkammer injiziert wird und dann in schnelle Rotation versetzt wird, wobei es nach oben in den Einlauftrichter 5 teilweise ausweicht, um sich mit dem in den Einlauftrichter 1 5 fallenden Milchpulver bereits in diesem zu vermischen. Das dabei entstehende Milch-Luftgemisch, welches in dem Einlauftrichter 5 an Rotationsenergie verliert, kann dann innerhalb des aufsteigenden Heißwasserstrudels nach unten in die Schäumkammer 6 zurücksinken, in der es von dem nachströmenden, durch die Düse 10 eingeleiteten Heißwasser-Luftgemisch wieder in schnellere Rotation versetzt wird, sich weiter mit dem Milchpulver, beziehungsweise bereits aufgelösten Milchpulver vermischt und dabei aufschäumt. Somit entsteht aus dem kontinuierlichen nachströmenden Heißwasser-Luftgemisch und dem fortlaufend in den Einlauftrichter 5 geförderten Milchpulver in einem fortlaufenden Misch-Schäumvorgang Milchschaum 20, der aus der Schäumkammer 6 durch die Auslauföffnung 8 nach unten durch die Auslaufstrecke 7 abfließt, wobei er durch einen Zentrierstab 21, der zentrisch teilweise in die Auslaufstrecke 7 ragt, zentriert wird, um schließlich von einem unter der Aufschäumeinheit 4 aufgestellten Auffanggefäß 22 aufgefangen und gesammelt zu werden. Aus dem Auffanggefäß 22 kann der Milchschaum zusammen mit aufgefangener Restmilch für eine Cappuccinozubereitung gebrühtem Kaffee zugegossen werden oder direkt in die Tasse einfließen. Dabei ist vorteilhaft, dass die in der Aufschäumeinheit 4 gebildete Restmilch noch annähernd die Temperatur des zugeführten Heißwassers hat und somit den Kaffee nicht unerwünscht abkühlt.

Zum Auflösen des Milchpulvers zu heißer Milch ohne Schaum wird, wie erwähnt, der Sperrschieber 1 5 geschlossen, so dass nur heißes Wasser in die Schäumkammer 6 injiziert wird, die somit zusammen mit dem Einlauftrichter 5 eine gleichmäßige Vermischung des Heißwassers mit dem Milchpulver und Auflösung desselben hervorruft. Dies gilt auch, wenn statt des Milchpulvers ein anderes Instantpulver verwendet wird.

In Figur 1 ist mit einer strichpunktierten Linie angedeutet, wie weit besonders zweckmäßig die als Wegwerfteil ausgebildete Aufschäumeinheit 4 an der Heißwasserleitung 13 reicht, auf die es mit wenigen Handgriffen aufgesteckt werden kann. Das Wegwerfteil ist massearm einstückig ausgeformt.

### Bezugszeichenliste

- 1: Pulver-Vorratsbehälter
- 2: Förderschnecke
- 3: Förderschneckenantrieb
- 4: Aufschäumeinheit
- 5: Einlauftrichter
- 5a: Mittelachse
- 6: Schäumkammer
- 7: Auslaufstrecke
- 8: Auslauföffnung
- 9: Pulvereinlauföffnung
- 10: Düse
- 11: Zylindrische Wand
- 11a: Zylindrische Innenwand ;
- 11b: Deckwand
- 11c: Boden
- 12: Wassereinlauf
- 13: Heißwasserleitung
- 14: Luftstrecke
- 15: Sperrschieber
- 16: Durchlauferhitzer
- 17: Wasserpumpe
- 18: Wasserbehälter
- 19: Kopplung
- 20: Milchschaum
- 21: Zentrierstab
- 22: Auffanggefäß

## Patentansprüche

1. Einrichtung zum selbstständigen Auflösen von Instantpulver, insbesondere Milchpulver, in heißem Wasser und insbesondere zum Aufschäumen, mit Strömungserzeugungsmitteln zum Erzeugen einer auf das Instantpulver mit einer zirkularen Komponente treffenden Strömung des heißen Wassers,
wobei eine vertikal angeordnete Schäumkammer (6) vorgesehen ist, die eine zylindrische Innenwand (11a) aufweist und in die eine Düse (10), die mit einer Heißwasserdruckleitung in Verbindung steht, so mündet, dass Heißwasser im Wesentlichen tangential in die Schäumkammer eintritt,
wobei die Schäumkammer eine Pulvereinlauföffnung (9) aufweist, in die ein Einlauftrichter (5) mündet, der innen um eine im Wesentlichen vertikale Mittelachse (5a) rotationssymmetrisch ist,
wobei die Schäumkammer (6) eine obere Deckwand (11b) mit der Pulvereinlauföffnung (9) umfasst und einen Boden (1 1 c) mit der Auslauföffnung (8) hat,
wobei eine freie Auslauffläche der Auslauföffnung (8) kleiner als eine freie Einlauffläche der Pulvereinlauföffnung (9) ist,
**dadurch gekennzeichnet,**
**dass** die Düse (10) tangential zu der Innenwand (11a) gerichtet ist, dass die obere Deckwand (11b) über die Pulvereinlauföffnung (9) in den über der oberen Deckwand (11b) angeordneten Einlauftrichter (5) übergeht,
**dass** sich lichte Querschnitte des Einlauftrichters (5) von unten nach oben progressiv erweitern und
**dass** in die Heißwasserdruckleitung (13) stromaufwärts eines Wassereinlaufs (12) der Düse (10) eine absperrbare Luftstrecke (15) mündet.

2. Einrichtung nach Anspruch 1,
**dadurch gekennzeichnet,**
**dass** über dem Einlauftrichter (6) eine im wesentlichen kontinuierlich fördernde Pulver-Fördereinrichtung angeordnet ist.

3. Einrichtung nach Anspruch 2,
**gekennzeichnet durch**
eine Förderschnecke (2) als Pulver-Fördereinrichtung.

4. Einrichtung nach einem der vorangehenden Ansprüche,
**dadurch gekennzeichnet,**
**dass** das Flächenverhältnis der freien Einlauffläche zu der freien Auslauffläche etwa 4:1 beträgt.

5. Einrichtung nach einem der vorangehenden Ansprüche,
**dadurch gekennzeichnet,**
**dass** die Pulvereinlauföffnung (9) rund ist und dass das Verhältnis eines Innendurchmessers der Schäumkammer (6) zu dem Durchmesser der Pulvereinlauföffnung (9) etwa 3:1 beträgt.

6. Einrichtung nach einem der vorangehenden Ansprüche,
**dadurch gekennzeichnet,**
**dass** die Auslauföffnung (8) in eine im wesentlichen vertikale hohlzylindrische Auslaufstrecke (7) übergeht.

7. Einrichtung nach Anspruch 6,
**dadurch gekennzeichnet,**
**dass** in ein unteres Ende der Auslaufstrecke (7) ein Zentrierstab (21) ragt.

8. Einrichtung nach einem der vorangehenden Ansprüche,
**dadurch gekennzeichnet,**
**dass** der Einlauftrichter (5) mit der Pulvereinlauföffnung (9) der Schäumkammer (6), die Schäumkammer (6), die Auslauföffnung (8) der Schäumkammer (6) und die Auslaufstrecke (7) um eine gemeinsame Mittelachse (5a) angeordnet sind.

9. Einrichtung nach einem der vorangehenden Ansprüche,
**dadurch gekennzeichnet,**
**dass** die Heißwasserdruckleitung (13) an einen Durchlauferhitzer (16) angeschlossen ist, der über eine Wasserpumpe (17) gespeist wird.

10. Einrichtung nach einem der Ansprüche 2 bis 9,
**dadurch gekennzeichnet,**
**dass** je ein Antrieb (3) der kontinuierlich fördernden Pulver-Fördereinrichtung (2) und der Wasserpumpe (17) durch eine Kopplung (19) miteinander gekoppelt sind.

11. Einrichtung nach einem der vorangehenden Ansprüche,
**dadurch gekennzeichnet,**
**dass** die Aufschäumeinheit (4) umfassend die Schäumkammer (6) mit der Düse (10), einem Wassereinlauf (12) in die Düse (10), die Auslaufstrecke (7) mit dem Zentrierstab (21) als ein Wegwerfteil ausgebildet ist, welches mit der Heißwasserleitung (13) auswechselbar verbindbar ist.

12. Einrichtung nach Anspruch 11,
**dadurch gekennzeichnet,**
**dass** das Wegwerfteil einstückig ausgeformt ist.

## Claims

1. Device for automatic dissolution of instant powder, in particular milk powder, in hot water and in particular for foaming, comprising flow generation means for generating a flow of hot water impinging with a circular component onto the instant powder,
wherein a vertically arranged foaming chamber (6) is provided having a cylindrical inner wall (11a) and into which opens a nozzle (10) which is connected with a hot water pressure duct so that the hot water enters substantially tangentially into the foaming chamber, wherein the foaming chamber includes a powder inlet opening (9) into which opens an inlet funnel (5) which in its interior is rotationally symmetrical about a substantially vertical center axis (5a),
wherein the foaming chamber (6) comprises an upper ceiling wall (11b) with the powder inlet opening (9) and has a bottom (11c) with the outlet opening (8),
wherein a free outflow face of the outlet opening (8) is smaller than a free inflow face of the powder inlet opening (9),
**characterized in**
**that** the nozzle (10) is tangentially directed towards the inner wall (11a),
**that** the upper ceiling wall (11b) passes over, via the powder inlet opening (9), into the inlet funnel (5) disposed above the upper ceiling wall (11b),
**that** the clear cross sections of the inlet funnel (5) progressively expand from the bottom upwardly, and
**that** upstream of a water inlet (12) of the nozzle (10), a lockable air duct opens into the hot water pressure duct (13).

2. Device according to claim 1,
**characterized in**
**that** above the inlet funnel (6) a substantially continuously conveying powder conveying means is arranged.

3. Device according to claim 2,
**characterized by**
a conveyor screw (2) as the powder conveying means.

4. Device according to one of the foregoing claims,
**characterized in**
**that** the area ratio of the free inflow face to the free outflow face amounts to about 4:1.

5. Device according to one of the foregoing claims,
**characterized in**
**that** the powder inlet opening (9) is round and that the ratio of an inside diameter of the foaming chamber (6) to the diameter of the powder inlet opening (9) amounts to about 3:1.

6. Device according to one of the foregoing claims,
**characterized in**
**that** the outlet opening (8) passes over into a substantially vertical hollow-cylindrical outflow path (7).

7. Device according to claim 6,
**characterized in**
**that** a centring rod (21) extends into a lower end of the outflow path (7).

8. Device according to one of the foregoing claims,
**characterized in**
**that** the inlet funnel (5) with the powder inlet opening (9) of the foaming chamber, the foaming chamber (6), the outlet opening (8) of the foaming chamber (6) and the outflow path (7) are arranged about a common middle shaft (5a).

9. Device according to one of the foregoing claims,
**characterized in**
**that** the hot water pressure duct (13) is connected to a continuous flow heater (16) fed via a water pump (17).

10. Device according to one of claims 2 to 9,
**characterized in**
**that** one drive (3) each of the continuously conveying powder conveying means (2) and of the water pump (17) are coupled with one another by means of a coupling (19).

11. Device according to one of the foregoing claims,
**characterized in**
**that** the foaming unit (4) comprising the foaming chamber (6) with the nozzle (10), a water inlet (12) into the nozzle (10), the outflow path (7) with the centring rod (21) is shaped as a throw-away part which may exchangeably be connected with the hot water duct (13).

12. Device according to claim 11,
**characterized in**
**that** the throw-away part is shaped as one piece.

## Revendications

1. Dispositif pour la dissolution spontanée d'une poudre instantanée, en particulier d'une poudre de lait, dans de l'eau chaude et en particulier pour faire de la mousse, comportant des moyens de production d'écoulement servant à produire un écoulement de l'eau chaude qui rencontre la poudre instantanée avec une composante circulaire,
dans lequel il est prévu une chambre de moussage (6) disposée verticalement, qui présente une paroi intérieure cylindrique (11a) et dans laquelle une buse (10) qui est en communication avec une conduite de pression d'eau chaude débouche de telle manière que l'eau chaude pénètre sensiblement tangentiellement dans la chambre de moussage,
dans lequel la chambre de moussage présente une ouverture d'entrée de poudre (9) dans laquelle débouche un entonnoir d'entrée (5) qui présente à l'intérieur une symétrie de rotation par rapport à un axe médian sensiblement vertical (5a),
dans lequel la chambre de moussage (6) possède une paroi de couverture supérieure (11b) qui présente l'ouverture d'entrée de poudre (9) et un fond (11c) qui présente l'ouverture de sortie (8),
dans lequel une surface de sortie libre de l'ouverture de sortie (8) est plus petite qu'une surface d'entrée libre de l'ouverture d'entrée de poudre (9),
**caractérisé en ce que** la buse (10) est dirigée pour être tangente à la paroi intérieure (11a),
**en ce que** la paroi de couverture supérieure (11b) se raccorde, au-dessus de l'ouverture d'entrée de poudre (9), à l'entonnoir d'entrée situé au-dessus de la paroi de couverture supérieure (11b),
**en ce que** les sections intérieures de l'entonnoir d'entrée (5) s'élargissent progressivement de bas en haut et
**en ce qu'**une voie d'air (15) pouvant être fermée débouche dans la conduite de pression d'eau chaude (13) en amont d'une entrée d'eau (12) de la buse (10).

2. Dispositif selon la revendication 1, **caractérisé en ce qu'**un dispositif de transport de poudre à transport sensiblement continu est disposé au-dessus de l'entonnoir d'entrée (6).

3. Dispositif selon la revendication 2, **caractérisé par** une vis transporteuse (2) en tant que dispositif de transport de poudre.

4. Dispositif selon l'une des revendications précédentes, **caractérisé en ce que** le rapport de surface entre la surface d'entrée libre et la surface de sortie libre vaut environ 4:1.

5. Dispositif selon l'une des revendications précédentes, **caractérisé en ce que** l'ouverture d'entrée de poudre (9) est ronde et **en ce que** le rapport d'un diamètre intérieur de la chambre de moussage (6) au diamètre de l'ouverture d'entrée de poudre (9) vaut environ 3:1.

6. Dispositif selon l'une des revendications précédentes, **caractérisé en ce que** l'ouverture de sortie (8) se raccorde à une voie de sortie cylindrique creuse (7) sensiblement verticale.

7. Dispositif selon la revendication 6, **caractérisé en ce qu'**une tige de centrage (21) est engagée dans une extrémité inférieure de la voie de sortie (7).

8. Dispositif selon l'une des revendications précédentes, **caractérisé en ce que** entonnoir d'entrée (5) muni de l'ouverture d'entrée de poudre (9) de la chambre de moussage (6), la chambre de moussage (6), l'ouverture de sortie (8) de la chambre de moussage (6) et la voie de sortie (7) sont disposés autour d'un axe médian commun (5a).

9. Dispositif selon l'une des revendications précédentes, **caractérisé en ce que** la conduite de pression d'eau chaude (13) est raccordée à un appareil de chauffage d'eau instantané (16) qui est alimenté au moyen d'une pompe à eau (17).

10. Dispositif selon l'une des revendications 2 à 9, **caractérisé en ce qu'**un entraînement (3) du dispositif de transport de poudre (2) à transport continu et un entraînement de la pompe à eau (17) sont couplés l'un à l'autre par un accouplement (19).

11. Dispositif selon l'une des revendications précédentes, **caractérisé en ce que** l'unité de moussage (4), qui comprend la chambre de moussage (6) équipée de la buse (10), d'une entrée d'eau (12) débouchant dans la buse (10), la voie de sortie (7) munie de la tige de centrage (21), constitue une partie jetable qui peut être raccordée à la conduite d'eau chaude (13) de façon échangeable.

12. Dispositif selon la revendication 11, **caractérisé en ce que** la partie jetable est formée d'une seule pièce.
